# EUROPEAN PATENT SPECIFICATION

(11) **EP 3 732 057 B1**
(45) Date of publication and mention of the grant of the patent: **12.02.2025**
(21) Application number: 18839630.3
(22) Date of filing: 27.12.2018
(51) Int. Cl.: B44B 5/00, B44F 9/02

(54) **METHOD TO OBTAIN A LAMINATED PRODUCT HAVING THREE- DIMENSIONAL DECORATIVE FIGURES, AND CORRESPONDING PRODUCT**
VERFAHREN ZUR HERSTELLUNG EINES LAMINIERTEN PRODUKTS MIT DREIDIMENSIONALEN DEKORATIVEN FIGUREN UND ENTSPRECHENDES PRODUKT
PROCÉDÉ POUR OBTENIR UN PRODUIT STRATIFIÉ AYANT DES MOTIFS DÉCORATIFS TRIDIMENSIONNELS, ET PRODUIT CORRESPONDANT

(30) Priority: 28.12.2017 IT 201700150747
(43) Date of publication of application: 04.11.2020
(73) Proprietor: Lamitex S.p.A., 33097 Spilimbergo (IT)
(72) Inventor: TURCHETTO, Renato, 33080 PORDENONE (IT); FADINI, Marco, 33100 UDINE (IT); ANDREUTTI, Luciano, 33030 MAJANO (IT)
(74) Representative: Petraz, Gilberto Luigi
(86) International application number: PCT/IT2018/050261
(87) International publication number: WO 2019/130371

(56) References cited:
- WO-A1-2005/046987
- WO-A2-2008/110883
- GB-A- 2 088 280
- US-A- 4 076 566
- US-A1- 2006 144 004
- US-A1- 2007 275 169
- US-A1- 2014 072 766

## Description

### FIELD OF THE INVENTION

The present invention concerns a method to obtain a multilayer laminate having three-dimensional decorative figures.

In particular, a multilayer laminate formed by the method of the present invention can be used in the fields of furniture covering, furnishing components, the building and naval trades and packaging. The method to make it uses unconventional equipment, able to considerably increase the level of definition of the three-dimensional decorative figures and of the designs impressed on the surface of the laminated product made.

### BACKGROUND OF THE INVENTION

Decorative covering elements are known and commercially available, made of laminated material in sheets or continuous, used to cover, for decorative and protective purposes, the external surfaces of furniture, fixtures and furnishing components in general.

These covering laminates are generally made of paper material, generally with a weight of about 70-150 g/m² in the case of raw paper, which is soaked with polymer resins and then subjected to cross-linking, generally in a press with the simultaneous action of pressing and heating, to guarantee that it is incorporated between the layer of cellulose material and the plastic layer deriving from the resin.

In order to obtain cross-linking of the resins, the impregnated sheets or the continuously impregnated material are subjected to lamination respectively in a static press and through a double-belt press at a temperature of about 180°C or higher, to allow the complete polymerization of the resins. The covering laminates are then made to stably adhere, for example by gluing, to the surfaces to be decorated.

One example of such sheets, wherein the resin is cross-linked in a press by the combined application of heat and pressure, is described in GB 2.088.280.

The sheets of laminated material thus prepared reproduce the surface appearance of wood, or the weave of other materials, and even after impregnation with the resin, they can be subjected to lacquering or surface varnishing in order to obtain a lacquered laminate.

The laminated products most commonly used for covering furniture are generally multilayer with different layers that adhere to each other by applying gluing resins, or by permeating the resins contained between the various adjacent layers.

Laminates are particularly suitable materials to cover surfaces as an alternative to so-called more noble materials. Their most appreciated properties are that they are flexible, resistant to scratches and water repellent, and cannot be attacked by most detergents and aggressive liquid substances available on the market and currently used in the domestic environment.

The latest generation of decorative laminates are designed to imitate covering materials such as wood and stone in a more sophisticated manner than in the past, and this fact increases their commercial appreciation, also because they are simpler to maintain and last longer.

Furthermore, the properties of covering laminates based on cellulose/plastic material are also influenced by the method by which the laminate is made. To this purpose, decorative laminates of the HPL (High Pressure Laminate) type, decorative laminates of the CPL (Continuous Pressure Laminate) type and decorative laminates of the CLPL (Continuous Low Pressure Laminate) type can be cited.

HPLs are extremely compact and boast excellent characteristics of mechanical, physical and chemical resistance, and are very simple to maintain, but are rigid. They are made of layers of cellulose fiber material impregnated with thermosetting synthetic resins, and then subjected to the combined and simultaneous action of high pressure (> 70 bar) and heat (T> 180°C). The pressure is applied in special flat presses with very long baking and/or cross-linking times.

CPLs are also appreciated for covering furniture, and generally consist of 2 or more layers of cellulose fiber material impregnated with thermosetting synthetic resins and then subjected to the combined and simultaneous action of pressure, generally less than 100 bar, and temperature (T> 160°C), exerted in special continuous presses with very short baking and/or cross-linking times.

CLPLs are very appreciated for covering and, unlike the previous ones, are made continuously and with relatively low pressure and working temperature, typically from 5 to 20 bar with 30°C <T <80°C, with off-line cross-linking in ovens equipped with climate conditioning.

The surface of the laminated products prepared with the above techniques can also be subjected to decoration by decorative designs appropriately applied on the surface.

In fact, with regard to aesthetic qualities, the technologies that have developed in recent years have allowed to make products characterized by a considerable variety, both in the richness of colors and in the decorative patterns.

With regard to the methods suitable to obtain the surface finish on a continuously laminated product, among the most used techniques we can cite the "casting release", where the surface finish is made using Hymmen type rolling presses.

The "casting release" technique can be used in the case of decorating a laminate, and uses a special film that, applied on the surface of the synthetic material still in its plastic state, impresses on its surface designs that reproduce fake-skin effects or a wood effect. The release film has raised designs complementary to those desired. Subsequently, the film and the laminated product are generally separated.

In other fields, the most used technique is embossing which, unlike "casting release" exploits the interference effect called "NIP".

By the term "embossing" we mean a particular technique by which the surface of a smooth material is engraved with raised designs, using a material matrix and exerting pressure. Optionally, heat can also be provided to the material so as to engrave the desired designs on its surface.

In general, different materials can be subject to the "embossing" technique. There are many examples on the market: the so-called "tin foil" used to wrap chocolates, the lid of yogurt pots, plastic folders for collecting documents, handkerchiefs and paper napkins, towel rolls, the walls of shower cubicles, wallpaper, and of course the covering paper used in various forms of packaging.

According to the most commonly used conventional technique, called "constant pressure" embossing, a sheet or film of a smooth material is forced to pass continuously in the interspace comprised between two rotary cylinders, which exert pressure on the material to be deformed, impressing the desired three-dimensional map through interference.

As an alternative to the constant pressure embossing technique, a controlled aperture embossing can be carried out, in which the two rotary cylinders are kept at a fixed distance, slightly less than the thickness of the sheet of material to be treated. In this way, the embossing pressure is provided by the material itself which must be forced to pass through the predetermined aperture between the two rotary cylinders.

In both these techniques, the surface of the first rotary cylinder is covered with a material matrix on which the decorative figures and designs are engraved, which are to be reproduced on the smooth material passing through the two rotary cylinders. The material matrix of this first cylinder generally consists of a hard and rigid material, such as steel or metal alloys for example.

The second rotary cylinder is referred to as the "abutment cylinder" and is characterized by a typically smooth surface on which the material to be decorated can suitably rest.

An example of this technique is described in US 2014/0072766 and US 2007/0275169.

WO2008110883A2 discloses a known method and device for manufacturing laminate and GB2088280A discloses embossed decorative laminates.

The pressing method between two rotary cylinders described above causes a deformation on the exposed surface of a laminate, which deformation is localized in certain areas and reproduces the reliefs and depressions of the original design impressed on the material matrix of the first cylinder.

In the case of three-dimensional decorative figures applied on a laminated product, the techniques described above have the limit that they are not able to achieve a satisfactory level of definition of the raised designs on the surface of the laminate.

Moreover, in the prior art the following disadvantages are found: breakage of the material due to crumbling under pressure, low production speed, poor retention of the three-dimensionality obtained, poor retention of the three-dimensionality in the subsequent working steps during the application of the laminate.

As a consequence of the numerous disadvantages cited above, the need is therefore felt to make available to the fields in question a laminated product provided with three-dimensional decorative figures and having an excellent anti-scratch resistance, and a better level of definition of the three-dimensional decorative figures impressed on its surface.

A primary purpose of the present invention is to perfect a method for the material finishing of a laminated product able to significantly increase the depth of the designs and the quality of the three-dimensional decorative figures impressed on the surface, possibly also synchronized continuously with printing.

Another purpose of the present invention is to make available, in various industrial fields where it can be used, a laminated product with three-dimensional decorative figures, having innovative characteristics, in particular a better level of definition of the three-dimensional raised designs, possibly also synchronized continuously with printing, and at the same time a high resistance to scratches.

The method of the present invention allows for the production of laminated products with three-dimensional decorative figures having improved aesthetic and tactile perception properties compared with decorative sheets available on the market.

The Applicant has devised, tested and embodied the present invention to overcome the shortcomings of the state of the art and to obtain these and other purposes and advantages.

### SUMMARY OF THE INVENTION

The present invention is set forth and characterized in the independent claim 1, while the dependent claims describe other characteristics of the invention or variants to the main inventive idea.

In accordance with the above purposes, one aspect of the present invention concerns a laminated product with three-dimensional decorative figures produced continuously by the continuous passage of a sheet material through a pressing device described hereafter, and comprising:
- one or more intermediate support layers consisting of a material chosen from printing paper, parchment, pre-impregnated paper, paper post-impregnated with synthetic resins, plastic film, transparent or not, non-woven fabric (NWF);
- at least one peripheral layer consisting of a material chosen from ink, decorative lacquer, paper impregnated with thermosetting resins.

The decorative figures, on the peripheral layer, are three-dimensional and are impressed on the peripheral layer by the forced passage of the laminated product in the interstitial space comprised between a first and a second material finishing apparatus. Moreover, the depth of the three-dimensional decorative figures, measured as the difference between upper crest and bottom of the incision, can be greater than 120 µm.

The term "pre-impregnated paper", as known to persons of skill in the field of laminates, in the present description and in the attached claims, means a paper material impregnated with synthetic liquid resins during the production step in the paper mill. Therefore, during the possible printing step, the layer of ink is applied on a paper material mixed with synthetic resins.

The term "post-impregnated paper", as known to persons of skill in the field of laminates, in the present description and in the attached claims, means a paper material first subjected to printing by ink, and subsequently impregnated using synthetic liquid resins.

The laminated products having three-dimensional decorative figures formed by a method according to the present invention can be used in an advantageous and effective way to cover furniture, furnishing components, in the building trade, indoor architecture, wallpaper, packaging, lighting, the naval trade, caravans & campers, coffins, automotive interiors and exhibition fittings.

They have a high degree of definition of the decorative figures impressed on their surface, as will be explained in detail with reference to the attached drawings.

Moreover, the laminated products formed by a method according to the invention have three-dimensional decorative figures with improved aesthetic properties and tactile perception, compared with the decorative laminates available on the market.

The laminated product with three-dimensional decorative figures formed by a method according to the invention also has a good anti-scratch resistance and excellent properties of flexibility, which make it suitable for covering also furnishing components having extreme shapes and radii of curvature (<1 mm).

With regard to its constituent layers, the laminate formed by the method of the present invention is a
multilayer product and preferably comprises two or three intermediate support layers, as well as at least one peripheral layer.

As previously said, the intermediate support layers consist of a material selected from printing paper, parchment paper, pre-impregnated paper, post-impregnated paper, transparent and non-transparent plastic film, non-woven fabric (NWF).

In the case of support layers consisting of a plastic film, the latter is preferably chosen from polyethylene terephthalate (PET), polymethyl methacrylate (PMMA), polyethylene (PE), polypropylene (PP), polycarbonate (PC), styrene-acrylonitrile copolymer (SAN).

In the case of support layers consisting of a material based on non-woven fabric (NWF), this material can be chosen from cellulose-based fibers, polypropylene-based fibers, polyester-based fibers.

In accordance with a preferred embodiment of the present invention, the support layer adjacent and below the peripheral layer defined above is preferably a paper-based material, such as for example a layer of printing paper, parchment, pre-impregnated paper, post-impregnated paper.

As previously specified, with regard to the peripheral layers of the laminated product, the present invention provides that the layer subjected to material finishing, by engraving three-dimensional decorative figures, consists of a layer of a material chosen from ink, decorative lacquer, paper impregnated with thermosetting resins, for example melamine or urea resins.

This results in a significant difference compared to conventional products of the state of the art having three-dimensional decorative figures: in them the peripheral layer on which the decorative figures are engraved is a thermoplastic polymer material, or paper impregnated with thermosetting resins not yet cross-linked (for example HPL, CPL), that is, materials which are easier to engrave and deform using conventional material finishing apparatuses, compared with the particular case of the present invention.

In the present invention, on the contrary, the peripheral layer on which the three-dimensional decorative figures are made is a material containing resins that are already cross-linked and chemically stabilized, which then, in the finishing/pressing step, are subjected only to a mechanical deformation, by means of which they acquire the desired aesthetic appearance, but are not subjected to any polymerization, cross-linking, or other chemical re-transformation.

Therefore, the preparation method according to the invention has the innovative characteristic of subjecting to material finishing at least one peripheral layer of decorative lacquer, of ink, of paper impregnated with thermosetting resins, which are already cross-linked and polymerized, by engraving, that is, a purely mechanical deformation, of three-dimensional decorative figures with a high level of definition.

It is clear that this type of laminate has greater difficulties and obstacles in being subjected to permanent corrugations and material deformations, compared with a layer of thermoplastic material and a layer of paper impregnated with thermosetting resins which have not yet been cross-linked, wherein the cross-linking/polymerization occurs simultaneously with the deformation and/or pressing step.

It has therefore become necessary to develop a particular material finishing method, so as to obtain a high definition and retention of the designs impressed on the laminate. The material finishing method according to the invention has shown itself to be surprisingly able to effectively impress the decorative figures on a laminated product comprising at least one peripheral layer with a base of decorative lacquer, paper impregnated with already cross-linked thermosetting resins, or ink.

One aspect of the invention is therefore a method to finish a laminated product, comprising at least one peripheral layer consisting of a material chosen from ink, decorative lacquer, paper impregnated with already cross-linked thermosetting resins, and one or more intermediate support layers made from a material chosen from printing paper, parchment, pre-impregnated paper, post-impregnated paper, transparent and non-transparent plastic film, non-woven fabric (NWF).

The finishing method according to the invention comprises the following steps:
a) unrolling the laminated product from a reel where it is stored, and subsequently controlling/adjusting its tension;
b) continuous passage of the laminated product in an interstitial space comprised between a first and a second material finishing apparatus;
c) transferring the laminated product with three-dimensional decorative figures obtained from step b) to a winding device;
in which method the surface of the first finishing apparatus is covered with a metal and/or polymer material matrix, while the second finishing apparatus is a rotary press with an elastic tempering deformable belt, not isotropic in the normal axis to the surface or alternatively, a deformable rotary cylinder covered with elastically-tempered isotropic material.

During step b) of the method in question, the surface of the peripheral layer, consisting of a material as defined above, is subjected to finishing by pressing against the metal and/or polymer material matrix that covers the first finishing apparatus.

As we said, the above method allows to impress three-dimensional decorative figures on the surface of the peripheral layer of the laminate. The depth of these three-dimensional decorative figures is even greater than 120 µm, measured as the difference between the upper crest and the bottom of the incision.

This advantage in terms of the level of definition of the three-dimensional decorative figures is made possible thanks to the use of a pair of finishing apparatuses, in which the second finishing apparatus is preferably a rotary belt press with elastic tempering, not isotropic in the normal axis to the surface.

### BRIEF DESCRIPTION OF THE DRAWINGS

These and other characteristics of the present invention will become apparent from the following description, given as a non-restrictive example with reference to the attached drawings wherein:
- fig. 1 shows a front section view of a first embodiment of a multilayer laminate with three-dimensional decorative figures according to the present invention, and the corresponding method to make it;
- fig. 2 shows a front section view of a second embodiment of a multilayer laminate with three-dimensional decorative figures according to the present invention, and the corresponding method to make it.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

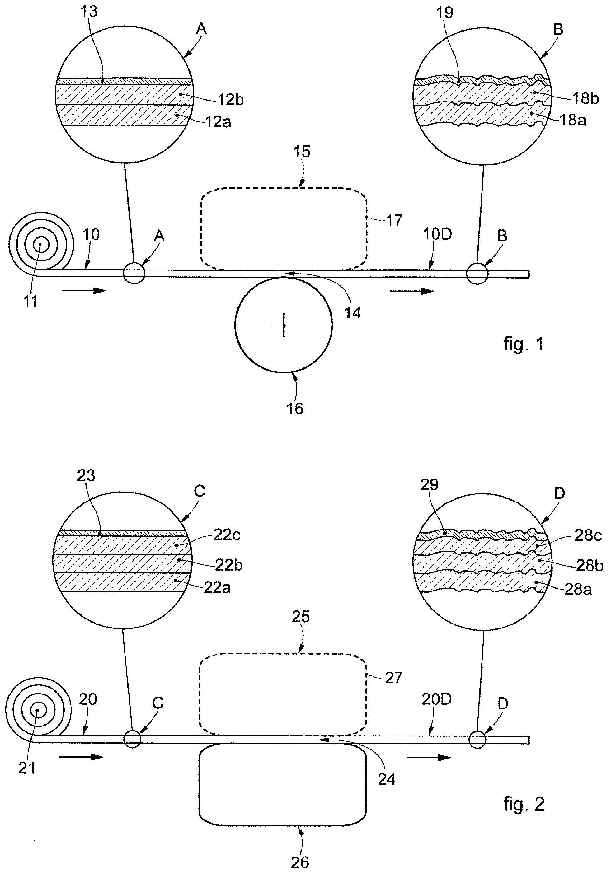

Fig. 1 shows a front section view of a simplified diagram of the method claimed here, for finishing the peripheral layer of a three-layered laminated product.

During step a) of the method, a laminated product 10 to be subjected to material finishing is unwound from a reel 11 used to store it, and subsequently subjected to tension control by means of suitable traction devices (not shown in fig. 1).

The laminated product 10 of fig. 1 comprises, in the non-restrictive example shown, two support layers and a peripheral layer to be put in contact with material finishing apparatuses.

The letter A indicates an enlargement of a portion of the multilayer laminate 10 in order to better highlight the individual constituent layers. In particular, in the non-restrictive example shown in fig. 1, the first support layer 12a is made of parchment paper, while the second support layer 12b is made of basic printing paper.

In the embodiment of fig. 1, the peripheral layer 13 of the multilayer 10 consists of a thin deposit of decorative lacquer.

The laminate 10 also comprises inside it polyolefin and/or polyurethane based substances, which are interposed between the various layers 12a, 12b and 13 in order to produce a cohesive product.

The multilayer laminate 10 is fed continuously from the reel 11 in the interstitial space 14 comprised between a first finishing apparatus 15 and a second finishing apparatus 16.

In the embodiment shown by way of example in fig. 1, the surface of the first finishing apparatus 15 is covered by a metal material matrix 17, while the second finishing apparatus 16 is represented by a rotary abutment cylinder: the latter has a covering surface preferably made of a deformable material with elastic tempering, isotropic.

During step b) of the method claimed, the surface of the peripheral layer 13 is subjected to deformation to obtain three-dimensional decorative figures, by pressing against the metal matrix 17 which covers the first finishing apparatus 15.

The interstitial space 14 between the two finishing apparatuses 15 and 16, through which the laminated product 10 is forced to pass, is also referred to by the term NIP, which generally indicates the mean linear load (measured in strength per unit of width [N/m]) between two rolling surfaces in contact and having the same peripheral speed.

The geometrical conformation of the interstitial space 14 influences the level of definition of the three-dimensional decorative figures, which are impressed on the surface of the peripheral layer 13 of the laminated product 10.

The interstitial space 14 between the two material finishing apparatuses 15 and 16 preferably extends over an operating width (work table) of more than 800 mm.

The operating conditions during the material finishing step b) are such as to maintain the operating temperature in a range comprised between 120° and 160°C, with pressures exerted comprised in a range varying from 150 bar to 450 bar.

These rather severe operating conditions of pressure and temperature, which are generated in the interstitial space 14 (NIP) given the type of pressing device, cause predominantly mechanical deformations and movements of material inside the layers that constitute the laminated product 10.

These deformations and movements of material are more incisive on the peripheral layer 13, which is the one most exposed to pressing, but they also affect the support layers 12a and 12b of the laminated product 10. In practice, the three-dimensional material deformations are located in certain areas of the laminate 10 and reproduce the protrusions and depressions of the matrix 17, which covers the surface of the first finishing apparatus 15.

The resins which at least partly make up the peripheral layer 13 are already in a cross-linked and polymerized condition, so that they are not subjected to any cross-linking reaction. Thanks to this, the high finishing pressure obtains the desired mechanical deformation on the peripheral layer 13, which is obtained, in the side of the peripheral layer 13, in the formation of deep and defined aesthetic formations, which are at least partly reproduced also on the opposite side of the laminated product 10.

The product, which does not require heat to cross-link the constituent resins, does not need high temperatures but only limited temperatures to promote the deformation and displacement of material inside the layers.

Preferably, the first finishing apparatus 15 also has the form of a rotary cylinder, covered on the surface by the matrix 17.

At exit from the interstitial space 14 between the apparatuses 15 and 16, the laminated product is enriched with the three-dimensional decorative figures, therefore it will be identified by 10D in the following description relating to fig. 1.

The letter B denotes an enlargement of a portion of the laminated product 10D having three-dimensional decorative figures according to the present invention. This is in order to better highlight the deformations to which the individual constituent layers have been subjected. In particular, the depressions and undulations inside the support layers 18A (parchment paper) and 18B (basic printing paper) are highlighted, as well as the three-dimensional designs that have formed on the surface of the peripheral layer 19 (decorative lacquer) of the laminate 10D.

The laminated product 10D obtained from step b) is subsequently transferred to a winding device (not shown in fig. 1) so it can be stored.

Fig. 2 shows a front section view by way of example of another diagram of the method according to the invention. In particular, a laminated product 20 comprising four layers is submitted to material finishing: specifically, three support layers and at least one peripheral surface layer.

The laminated product 20 to be subjected to material finishing is unwound from a reel 21 used to store it, and subsequently subjected to tension control by means of suitable traction devices (not shown in fig. 2).

In fig. 2 an enlarged portion of a multilayer laminate 20 is denoted by the letter C, in order to better highlight the individual constituent layers. In particular, in the embodiment of fig. 2, the first support layer 22a is made of parchment paper, the second support layer 22b is made of polyethylene terephthalate (PET), while the third support layer 22c is made of basic printing paper.

In the embodiment of fig. 2, the peripheral layer 23 of the multilayer 20 consists of a double deposit, ink (printing) and transparent lacquers.

The laminate 20 also comprises inside it substances with a polyolefin and/or polyurethane base, which are interposed between the various layers 22a, 22b, 22c and 23 in order to generate a cohesive product.

The multilayer laminate 20 is fed continuously in the interstitial space 24 comprised between a first finishing apparatus 25 and a second finishing apparatus 26.

In the embodiment shown by way of example in fig. 2, the surface of the first finishing apparatus 25 is covered by a metal material matrix 27, while the second finishing apparatus 26 is represented by a rotary press with an elastic tempering deformable belt, not isotropic in the normal axis to the surface. Preferably, the belt of the rotary press 26 is made of a material selected from felt and textile fibers.

During step b) of the method according to the invention, the surface of the peripheral layer 23 is subjected to deformation to obtain three-dimensional decorative figures, by pressing against the metal matrix 27, which covers the first finishing apparatus 25.

The contact surface between the multilayer laminate 10, 20 and the belt of the rotary press 16, 26 extends for a length varying between 1% and 80% of the total development of the belt.

The operating conditions of temperature and pressure to which the multilayer product 20 is subjected during the material finishing step b) are the same indicated with reference to fig. 1. These rather severe operating conditions of pressure and temperature, which are generated in the interstitial space 24 interposed between the two finishing apparatuses 25 and 26, cause mainly mechanical deformations and movements of material inside the layers that constitute the multilayer laminate 20.

At exit from the interstitial space 24 between the apparatuses 25 and 26, the laminated product is enriched with three-dimensional decorative figures, deep and defined, so that it will be identified by 20D in the following description relating to fig. 2.

An enlargement of a portion of the laminate 20D is also indicated with the letter D, having three-dimensional decorative figures according to the present invention. This is in order to better highlight the deformations to which the individual constituent layers have been subjected.

In particular, the depressions and undulations inside the support layers 28a (parchment paper), 28b (PET) and 28c (basic printing paper) are highlighted, as well as the three-dimensional designs formed on the peripheral layer 29 (ink and transparent lacquers) of the multilayer laminate 20D.

These deformations and movements of material are more incisive on the peripheral layer 29, which is the one most exposed to pressing, but also affect the support layers 28A, 28B and 28C of the laminated product 20D. In practice, the protrusions and depressions of the metal matrix 27 are reproduced, which covers the surface of the first finishing apparatus 25.

The laminated product 20D obtained from step b) is subsequently transferred to a winding device (not shown in fig. 2) to be stored.

The material finishing method described here allows to impress on the peripheral layer of a laminate 10, 20 three-dimensional decorative figures also possibly synchronized continuously with the printing.

In both the embodiments relating to figs. 1 and 2, the finishing method according to the present invention allows to obtain a laminated product 10D, 20D having three-dimensional decorative figures, whose depth is more than 120 µm, preferably more than 150 µm, measured as the difference between the upper crest and the bottom of the incision.

The laminated product 10D, 20D with three-dimensional decorations according to the invention and the method to make it have been described with reference to the embodiments shown by way of example in figs. 1-2, the invention is defined by the appended claims.

In the following claims, the sole purpose of the references in brackets is to facilitate reading: they must not be considered as restrictive factors with regard to the field of protection claimed in the specific claims.

## Claims

1. Method to finish a laminated product (10, 20) comprising at least one peripheral layer (13, 23) consisting of a material chosen from ink, decorative lacquer, paper impregnated with thermosetting resins, and one or more intermediate support layers (12a, 12b; 22a, 22b, 22c) made from a material chosen from printing paper, parchment, pre-impregnated paper, post-impregnated paper, plastic film, non-woven fabric (NWF);
wherein
said finishing method comprises the following steps:
a) unrolling said laminated product (10, 20) coming from a reel (11, 21) where it is stored, and subsequent adjustment of its tension;
b) impressing three-dimensional decorative figures on the surface of said peripheral layer (13, 23) by means of continuous forced passage of said laminated product (10, 20) in an interstitial space (14, 24) comprised between a first (15, 25) and a second material finishing apparatus (16, 26);
c) transferring the laminated product (10D, 20D) with said three-dimensional decorative figures obtained from step b) to a winding device;
wherein said peripheral layer (13, 23) at least partly comprises resins which have already been cross-linked and polymerized, which in the passage through said first (15, 25) and second material finishing apparatus (16, 26) are deformed mainly mechanically in temperature conditions comprised between 120°C and 160°C and at a pressure between 150 and 450 bar,
wherein the surface of said first finishing apparatus (15, 25) is covered by a metal and/or polymer material matrix (17, 27), while the second finishing apparatus (16, 26) is a rotary press with an elastic tempering deformable belt not isotropic in the normal axis to the surface, or alternatively, a deformable rotary cylinder covered with elastically-tempered isotropic material.

2. Method as in claim 1, **characterized in that** during said step b) the surface of said peripheral layer (13, 23) is subjected to finishing by pressing against the metal material and/or polymer matrix (17, 27) that covers said first finishing apparatus (15, 25).

3. Method as in any of the claims from 1 or 2, **characterized in that** said interstitial space (14, 24) between the two finishing apparatuses (15, 25) and (16, 26) extends for an operating width of more than 800 mm.

4. Method as in any of the claims from 1 to 3, **characterized in that** when said second finishing apparatus (26) is a rotary press with a belt, said belt is made of a material chosen between felt and textile fibers.

5. Method as in any of the claims from 1 to 4, **characterized in that** said first finishing apparatus (15, 25) is a rotary cylinder covered by a metal material and/or polymer matrix (17, 27).

6. Method as in any of the claims from 1 to 5, **characterized in that** the contact surface between said multilayered laminated product (10, 20) and the belt of said rotary press (16, 26) extends for a length variable between 1% and 80% of the total development of said belt.

7. Method as in any of the claims from 1 to 6, **characterized in that** three-dimensional decorative figures are impressed on said laminated product (10, 20), synchronized in continuous with printing.

8. Method as in any of the claims from 1 to 7, **characterized in that** said one or more intermediate support layers consist of films of plastic material chosen from polyethylene terephthalate (PET), polymethylmethacrylate (PMMA), polyethylene (PE), polypropylene (PP), polycarbonate (PC), styrene-acrylonitrile copolymer (SAN).

9. Method as in any of the claims from 1 to 8, **characterized in that** said non-woven fabric (NWF) is chosen from cellulose based fibers, polypropylene based fibers and polyester based fibers.

10. Method as in any of the claims from 1 to 9, **characterized in that** the depth of said three-dimensional decorative figures is more than 120 µm.

11. Method as in any of the claims from 1 to 10, **characterized in that** substances with a polyolefin and/or polyurethane base, interposed between the various layers are provided in order to make a cohesive product.

## Patentansprüche

1. Verfahren zum Endbearbeiten eines laminierten Produkts (10, 20), das aufweist wenigstens eine äußere Schicht (13, 23), die aus einem Material besteht, das gewählt ist aus Tinte, dekorativem Lack, mit wärmehärtbaren Harzen imprägniertem Papier, und eine oder mehrere Zwischenstützschichten (12a, 12b; 22a, 22b, 22c), die aus einem Material gemacht sind, das gewählt ist aus Druckpapier, Pergament, vorimprägniertem Papier, nachimprägniertem Papier, Kunststofffolie, Vliesstoff (NWF),
wobei das Endbearbeitungs-Verfahren die folgenden Schritte aufweist:
a) Abwickeln des laminierten Produkts (10, 20), das von einer Rolle (11, 21) kommt, auf der es gespeichert ist, und nachfolgendes Einstellen seiner Spannung,
b) Eindrücken von dreidimensionalen dekorativen Figuren auf der Oberfläche der äußeren Schicht (13, 23) mittels eines kontinuierlichen gezwungenen Passierens des laminierten Produkts (10, 20) in einem Zwischenraum (14, 24), der zwischen einer ersten (15, 25) und einer zweiten Materialendbearbeitungsvorrichtung (16, 26) vorliegt,
c) Transferieren des laminierten Produkts (10D, 20D) mit den dreidimensionalen dekorativen Figuren, die in Schritt b) erhalten wurden, to einer Aufwickelvorrichtung,
wobei die äußere Schicht (13, 23) wenigstens teilweise Harze aufweist, die bereits vernetzt und polymerisiert worden sind und die beim Passieren durch die erste (15, 25) und die zweite Materialendbearbeitungsvorrichtung (16, 26) hauptsächlich mechanisch deformiert werden bei Temperaturbedingungen, die zwischen 120°C und 160°C liegen, und einem Druck zwischen 150 und 450 bar,
wobei die Oberfläche der ersten Endbearbeitungsvorrichtung (15, 25) von einer Metall- und/oder Polymer-Material-Matrix (17, 27) bedecket ist, wobei die zweite Endbearbeitungsvorrichtung (16, 26) eine Rotationspresse mit einem elastischen temperierenden deformierbaren Band, das in der Normalen-Achse zu der Oberfläche nicht isotrop ist, oder alternativ ein deformierbarer Rotationszylinder ist, der mit einem elastischtemperierten isotropen Material bedeckt ist.

2. Verfahren gemäß Anspruch 1, **dadurch gekennzeichnet, dass** während des Schritts b) die Oberfläche der äußeren Schicht (13, 23) einem Endbearbeiten unterzogen wird durch Pressen gegen die Metall-Material- und/oder Polymer-Matrix (17, 27), welche die erste Endbearbeitungsvorrichtung (15, 25) bedeckt.

3. Verfahren gemäß irgendeinem der Ansprüche 1 oder 2, **dadurch gekennzeichnet, dass** der Zwischenraum (14, 24) zwischen den beiden Endbearbeitungsvorrichtungen (15, 25) und (16, 26) sich über eine Betriebsweite von mehr als 800 mm erstreckt.

4. Verfahren gemäß irgendeinem der Ansprüche 1 bis 3, **dadurch gekennzeichnet, dass**, wenn die zweite Endbearbeitungsvorrichtung (26) eine Rotationspresse mit einem Band ist, das Band aus einem Material gemacht ist, das ausgewählt ist zwischen Filz und Textilfasern.

5. Verfahren gemäß irgendeinem der Ansprüche 1 bis 4, **dadurch gekennzeichnet, dass** die erste Endbearbeitungsvorrichtung (15, 25) ein Rotationszylinder ist, der von einer Metall-Material- und/oder Polymer-Matrix (17, 27) bedeckt ist.

6. Verfahren gemäß irgendeinem der Ansprüche 1 bis 5, **dadurch gekennzeichnet, dass** die Kontaktfläche zwischen dem multischichtigen laminierten Produkt (10, 20) und dem Band der Rotationspresse (16, 26) sich über eine Länge erstreckt, die variabel ist zwischen 1% und 80% der Gesamterstreckung des Bands.

7. Verfahren gemäß irgendeinem der Ansprüche 1 bis 6, **dadurch gekennzeichnet, dass** die dreidimensionalen Figuren an dem laminierten Produkt (10, 20) eingedrückt werden kontinuierlich synchronisiert mit einem Drucken.

8. Verfahren gemäß irgendeinem der Ansprüche 1 bis 7, **dadurch gekennzeichnet, dass** die eine oder die mehreren Zwischenstützschichten aus Folien aus Kunststoffmaterial bestehen, das ausgewählt ist aus Polyethylen-Terephthalat (PET), Polymethylmethacrylat (PMMA), Polyethylen (PE), Polypropylen (PP), Polycarbonat (PC), Styrol-Acrylnitril-Copolymer (SAN).

9. Verfahren gemäß irgendeinem der Ansprüche 1 bis 8, **dadurch gekennzeichnet, dass** der Vliesstoff (NWF) gewählt ist aus Zellulose-basierten Fasern, Polypropylen-basierten Fasern und Polyester-basierten Fasern.

10. Verfahren gemäß irgendeinem der Ansprüche 1 bis 9, **dadurch gekennzeichnet, dass** die Tiefe der dreidimensionalen dekorativen Figuren größer als 120 µm ist.

11. Verfahren gemäß irgendeinem der Ansprüche 1 bis 10, **dadurch gekennzeichnet, dass** Substanzen mit einer Polyolefin- und/oder Polyurethan-Basis, die zwischen den diversen Schichten zwischengeordnet sind, bereitgestellt werden, um ein zusammenhaltendes Produkt zu erstellen.

## Revendications

1. Procédé de finition d'un produit laminé (10, 20) comprenant au moins une couche périphérique (13, 23) réalisée à partir d'un matériau choisi parmi de l'encre, de la laque décorative, du papier imprégné de résines thermodurcissables, et une ou plusieurs couches de support intermédiaires (12a, 12b ; 22a, 22b, 22c) réalisées à partir d'un matériau choisi parmi du papier d'impression, du parchemin, du papier pré-imprégné, du papier post-imprégné, du film plastique, du tissu non tissé (NWF) ;
dans lequel
ladite méthode de finition comprend les étapes suivantes :
a) déroulage dudit produit laminé (10, 20) provenant d'une bobine (11, 21) où il est stocké, puis réglage de sa tension ;
b) impression de figures décoratives tridimensionnelles sur la surface de ladite couche périphérique (13, 23) au moyen d'un passage continu forcé dudit produit laminé (10, 20) dans un espace interstitiel (14, 24) compris entre un premier (15, 25) et un second appareil de finition des matériaux (16, 26) ;
c) transfert du produit laminé (10D, 20D) avec lesdites figures décoratives tridimensionnelles obtenues à l'étape b) vers un dispositif d'enroulement ;
dans lequel ladite couche périphérique (13, 23) comprend au moins en partie des résines qui ont déjà été réticulées et polymérisées et qui, lors de leur passage dans le premier (15, 25) et le second appareil de finition des matériaux (16, 26), sont déformées principalement mécaniquement dans des conditions de température comprises entre 120°C et 160°C et à une pression comprise entre 150 et 450 bar,
dans lequel la surface dudit premier appareil de finition (15, 25) est recouverte d'une matrice en matériau métallique et/ou en matériau polymérique (17, 27), tandis que le second appareil de finition (16, 26) est une presse rotative dotée d'une bande élastique de trempe déformable non isotrope dans l'axe normal à la surface, ou alternativement, un cylindre rotatif déformable recouvert d'un matériau isotrope à trempe élastique.

2. Procédé selon la revendication 1, **caractérisé en ce que** pendant ladite étape b), la surface de ladite couche périphérique (13, 23) est soumise à une finition par pressage contre la matrice en matériau métallique et/ou polymérique (17, 27) qui recouvre ledit premier appareil de finition (15, 25).

3. Procédé selon l'une quelconque des revendications 1 ou 2, **caractérisé en ce que** ledit espace interstitiel (14, 24) entre les deux appareils de finition (15, 25) et (16, 26) s'étend sur une largeur de fonctionnement supérieure à 800 mm.

4. Procédé selon l'une quelconque des revendications 1 à 3, **caractérisé en ce que** lorsque le second appareil de finition (26) est une presse rotative à courroie, ladite courroie étant constituée d'un matériau choisi entre le feutre et les fibres textiles.

5. Procédé selon l'une quelconque des revendications 1 à 4, **caractérisé en ce que** ledit premier appareil de finition (15, 25) est un cylindre rotatif recouvert d'une matrice en matériau métallique et/ou d'une polymérique (17, 27).

6. Procédé selon l'une quelconque des revendications 1 à 5, **caractérisé en ce que** la surface de contact entre ledit produit laminé multicouche (10, 20) et la bande de ladite presse rotative (16, 26) s'étend sur une longueur variable entre 1 % et 80 % du développement total de ladite bande.

7. Procédé selon l'une quelconque des revendications 1 à 6, **caractérisé par** l'impression de figures décoratives tridimensionnelles sur le produit laminé (10, 20), synchronisée en continu avec l'impression.

8. Procédé selon l'une quelconque des revendications de 1 à 7, **caractérisé en ce que** la ou les couches de support intermédiaires sont réalisées à partir de films en matière plastique choisis parmi le polyéthylène téréphtalate (PET), le polyméthacrylate de méthyle (PMMA), le polyéthylène (PE), le polypropylène (PP), le polycarbonate (PC), le copolymère styrène-acrylonitrile (SAN).

9. Procédé selon l'une quelconque des revendications de 1 à 8, **caractérisé en ce que** ledit tissu non tissé (NWF) est choisi parmi les fibres à base de cellulose, les fibres à base de polypropylène et les fibres à base de polyester.

10. Procédé selon l'une quelconque des revendications 1 à 9, **caractérisé en ce que** la profondeur des figures décoratives tridimensionnelles est supérieure à 120 µm.

11. Procédé selon l'une quelconque des revendications de 1 à 10, **caractérisé en ce que** des substances à base de polyoléfine et/ou de polyuréthane, interposées entre les différentes couches, sont prévues afin d'obtenir un produit cohésif.
